# FASCICULE DE BREVET EUROPEEN

(11) **EP 2 942 771 B1**
(45) Date de publication et mention de la délivrance du brevet: **04.07.2018**
(21) Numéro de dépôt: 15166323.4
(22) Date de dépôt: 05.05.2015
(51) Int. Cl.: G09F 13/18, F21V 8/00, G02F 1/1335

(54) **DISPOSITIF D'AFFICHAGE D'UNE ÉTIQUETTE**
ANZEIGEVORRICHTUNG VON ETIKETTEN
DEVICE FOR DISPLAYING LABELS

(30) Priorité: 05.05.2014 FR 1454052
(43) Date de publication de la demande: 11.11.2015
(73) Titulaire: Eaton Intelligent Power Limited, Dublin 4 (IE)
(72) Inventeur: Lacour, Frédéric, 63670 La Roche Blanche (FR)
(74) Mandataire: Gendron, Vincent Christian

(56) Documents cités:
- US-A1- 2004 130 883
- US-A1- 2008 002 428
- US-A1- 2008 106 913
- US-A1- 2009 167 988

## Description

La présente invention concerne, de façon générale, le domaine de l'éclairage de sécurité. Elle concerne plus particulièrement un dispositif d'affichage d'éléments de signalisation, comprenant un panneau support, au moins un élément de signalisation, le plus souvent sous la forme d'une étiquette avec pictogramme, porté par ledit panneau support et un module de rétro-éclairage dudit élément de signalisation comprenant une pluralité de diodes électroluminescentes montées alignées avec des espaces inter-diodes sur un circuit imprimé allongé disposé suivant au moins un bord dudit panneau support, et un film diffusant disposé adjacent entre ledit module de rétro-éclairage et ledit élément de signalisation.

De tels dispositifs d'affichage sont couramment utilisés dans les établissements recevant du public, aussi bien pour assurer par exemple le balisage des issues d'un tel établissement et/ou celui des services qui y sont proposés, que pour constituer un éclairage de sécurité. Le document de brevet US 5,365,411 fait par exemple connaître un dispositif de ce type où le message fourni par l'élément de signalisation porté par le panneau support est éclairé par diffusion suivant l'épaisseur de celui-ci au moyen de diodes électroluminescentes. Ce document décrit une solution permettant de pallier l'effet indésirable de « points chauds » au niveau de l'élément de signalisation, dus à l'utilisation des diodes électroluminescentes pour son éclairage et se traduisant par des zones de proximité immédiate des diodes électroluminescentes, lumineuses et sombres, qui dégradent le rendu d'éclairage de l'élément de signalisation. Ainsi, les diodes sont alignées au niveau de parois latérales longitudinales opposées du panneau support, au-dessus d'une paroi arrière du panneau support, et sont masquées par des éléments de blindage inclinés venant d'une pièce avec l'extrémité supérieure des parois latérales et s'étendant vers l'intérieur du panneau support. La lumière émise par les diodes est réfléchie par la paroi arrière du panneau support et la lumière ainsi réfléchie est transmise au niveau d'une face frontale du panneau support via un film diffusant s'étendant au travers du panneau support et situé au dessus des éléments de blindage.

Si cet agencement procure une diffusion relativement uniforme de la lumière malgré l'utilisation de diodes électroluminescentes pour l'éclairage du pictogramme, il implique toutefois de masquer complètement les diodes par des éléments de blindage pour supprimer les points chauds, avec l'effet défavorable de créer en regard de ces éléments de blindage des bandes sensiblement moins éclairées au niveau du pictogramme, même en présence du film diffusant entre ces éléments de blindage et le pictogramme. En outre, la présence des éléments de blindage inclinés vers l'intérieur du panneau support nuit à l'encombrement de l'ensemble. Or, en fonction des locaux dans lesquels ces dispositifs d'affichage doivent être installés, une certaine discrétion ou un caractère esthétique de ceux-ci peuvent être recherchés ou exigés.

US 2008/106913 divulgue un dispositif d'affichage d'éléments de signalisation, comprenant un panneau support, au moins un élément illuminé de signalisation, qui peut être en principe de nature quelconque, porté par ledit panneau support, un module de rétro-éclairage dudit élément de signalisation comprenant une pluralité de diodes électroluminescentes montées alignées avec des espaces inter-diodes sur un circuit imprimé allongé disposé suivant au moins un bord dudit panneau support, et un film diffusant disposé adjacent entre ledit module de rétro-éclairage et ledit élément de signalisation, ledit module de rétro-éclairage comprenant une plaque-guide de lumière présentant une surface de couplage avec ladite pluralité de diodes électroluminescentes depuis laquelle la lumière est émise latéralement dans ladite plaque-guide de lumière, une première surface disposée adjacente audit film diffusant et une seconde surface opposée à ladite première surface sur laquelle est formé un réseau de cavités et/ou protubérances constituant en effet des microlentilles pour diriger la lumière conduite dans la plaque-guide de lumière vers ledit film diffusant, la densité de microlentilles étant plus élevée dans des régions de ladite seconde surface immédiatement voisines à ladite surface de couplage et situées au droit des espaces inter-diodes dudit circuit imprimé, et moins élevée dans des régions de ladite seconde surface immédiatement voisines à ladite surface de couplage et situées au droit des diodes électroluminescentes.

Dans ce contexte, l'invention a pour but de proposer un dispositif d'affichage d'éléments de signalisation exempt des limitations qui viennent d'être évoquées. En particulier, un but de l'invention est de proposer un dispositif d'affichage d'élément de signalisation éclairé par diodes électroluminescentes, présentant une apparence sensiblement uniformément éclairé sur la totalité de la surface de diffusion de l'élément de signalisation ainsi éclairé, tout en permettant une plus grande compacité pour une meilleure intégration à son environnement.

A cette fin, l'invention concerne un dispositif d'affichage selon la revendication 1, d'une étiquette avec pictogramme de sécurité, comprenant un panneau support portant ladite étiquette, un module de rétro-éclairage (13) de ladite étiquette (12) comprenant une pluralité de diodes électroluminescentes (132) montées alignées avec des espaces inter-diodes (133) sur un circuit imprimé allongé (131) disposé suivant au moins un bord (113) dudit panneau support (11), et un film diffusant (14) disposé adjacent entre ledit module de rétro-éclairage (13) et ladite étiquette, caractérisé en ce que ladite étiquette comporte un bord supérieur positionné directement en regard de ladite pluralité de diodes électroluminescentes, sans distance entre ledit bord supérieur et ladite pluralité de diodes électroluminescentes, ladite distance s'entendant dans le plan dudit panneau support, ledit module de rétro-éclairage comprenant une plaque-guide de lumière présentant une surface de couplage avec ladite pluralité de diodes électroluminescentes depuis laquelle la lumière est émise latéralement dans ladite plaque-guide de lumière, une première surface disposée adjacente audit film diffusant et une seconde surface opposée à ladite première surface sur laquelle est formé un réseau de microlentilles pour diriger la lumière conduite dans la plaque-guide de lumière vers ledit film diffusant, la densité de microlentilles étant plus élevée dans des régions de ladite seconde surface immédiatement voisines à ladite surface de couplage et situées au droit des espaces inter-diodes dudit circuit imprimé, et moins élevée dans des régions de ladite seconde surface immédiatement voisines à ladite surface de couplage et situées au droit des diodes électroluminescentes.

Grâce à cet agencement, il est possible d'atténuer fortement, voire de supprimer, l'effet de points chaud des diodes électroluminescentes au niveau de l'élément de signalisation éclairé par elles, sans pour autant qu'il soit nécessaire, comme cela est pratiqué habituellement, de masquer ces dernières au moyen d'un cache quelconque, au détriment de l'uniformité d'éclairage de l'élément de signalisation. En effet, en maximisant la densité de microlentilles au niveau de la plaque-guide de lumière dans des régions de celle-ci circonscrites aux zone immédiatement situées au droit des espaces inter-diodes, tout en minimisant la densité de microlentilles dans les régions de la plaque-guide de lumière circonscrites aux zone immédiatement situées au droit des diodes, on rend sensiblement uniforme la densité d'éclairage au niveau de la surface de diffusion du guide de lumière et l'élément de signalisation peut venir directement recouvrir en bordure les diodes électroluminescentes avec un effet de points chauds fortement atténué, d'autant plus que l'élément de signalisation participe aussi lui-même au masquage de ces points chauds notamment lorsqu'il se présente sous la forme d'une étiquette portant un pictogramme de sécurité présentant une couleur verte (telle que requise par les normes en vigueur en la matière) dans la zone de recouvrement des diodes.

Ainsi, l'éclairage par diodes par la tranche combiné au masquage des points chauds par la plaque-guide de lumière et le pictogramme placé devant, procure un rendu visuel de l'éclairage du pictogramme spatialement uniforme et particulièrement esthétique. Selon l'invention, ledit film diffusant comprend alternativement des zones claires et des zones foncées disposées en regard respectivement desdites régions de ladite seconde surface de ladite plaque-guide de lumière immédiatement voisines à ladite surface de couplage et situées au droit des espaces inter-diodes et desdites régions de ladite seconde surface immédiatement voisines à ladite surface de couplage et situées au droit des diodes électroluminescentes. De la sorte, l'effet de masquage des points chauds est encore renforcé.

De préférence, lesdites zones foncées sont formées par impression sérigraphique à l'arrière du film diffusant.

Avantageusement, les régions de ladite seconde surface immédiatement voisines à ladite surface de couplage et situées au droit des diodes électroluminescentes peuvent être dépourvues de microlentilles, afin de diminuer encore le contraste avec les régions adjacentes au droit des espaces inter-diodes.

Avantageusement, un film réfléchissant est disposé adjacent à ladite seconde surface de ladite plaque-guide de lumière.

Avantageusement, ledit panneau support est constitué d'une plaque munie d'une zone évidée de forme complémentaire à celle de l'élément de signalisation et d'une zone de bordure délimitée du côté de ladite zone évidée par une surface interne plane constituant ledit au moins un bord dudit panneau support. Selon cette configuration du panneau support, ladite plaque-guide de lumière, ledit film diffusant et ledit élément de signalisation sont avantageusement montés et maintenus en contact plan entre eux dans ladite zone évidée, de sorte que ledit élément de signalisation s'étend dans un plan sensiblement confondu avec la face extérieure du panneau support.

Une telle configuration permet d'obtenir un dispositif d'affichage d'élément de signalisation d'une grande planéité et d'une grande finesse.

Avantageusement, ledit film diffusant et ledit élément de signalisation peuvent former un même élément.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue éclatée du dispositif d'affichage selon un mode de réalisation préféré de la présente invention ;
- la figure 2 est une vue de détail de la plaque-guide de lumière au voisinage immédiat de la surface de couplage de la plaque-guide de lumière avec les diodes électroluminescentes.

Le dispositif d'affichage 10 selon l'invention comprend globalement un panneau support 11 réalisé en plastique translucide, qui porte un élément de signalisation 12, sous la forme par exemple d'une étiquette affichant un pictogramme de sécurité, qui représente par exemple un personnage passant une porte et/ou une flèche directionnelle, dans des couleurs de sécurité prédéterminées, typiquement verte et blanche. En particulier, un tel pictogramme doit satisfaire à des exigences définissant les caractéristiques d'affichage pour les indications de signalisation d'urgence, telles que définies notamment dans les normes ISO 7010:2011, ISO 3864-3:2012, ISO 3864-4 :2011 et EN 1838:2013.

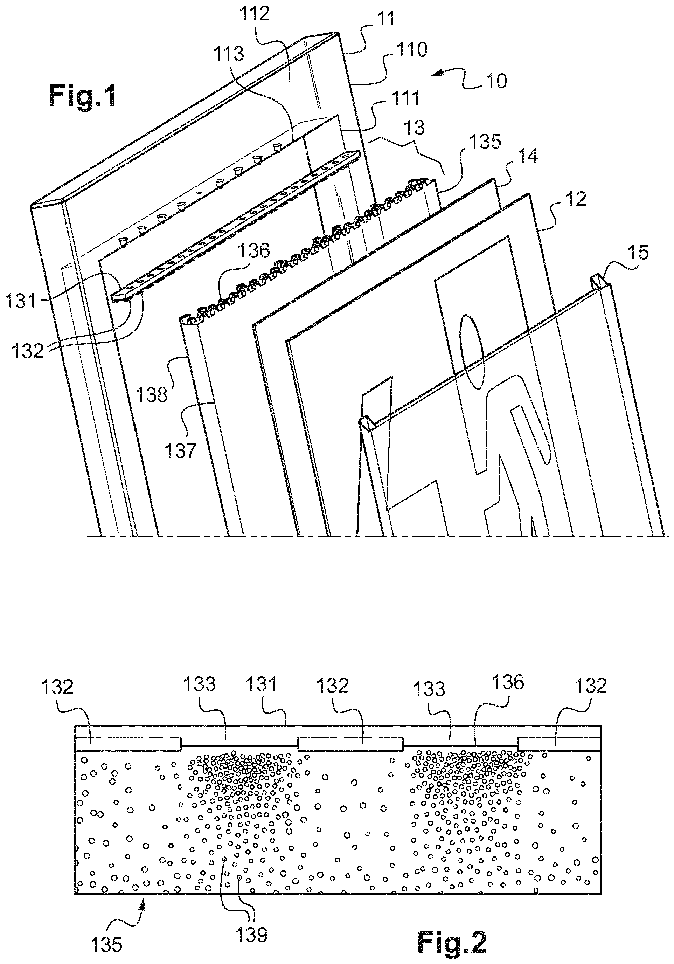

Le dispositif d'affichage comprend également un module de rétro-éclairage 13 de l'élément de signalisation 12, qui, pour la mise en évidence du pictogramme porté par l'élément de signalisation 12, procure un éclairage suivant une tranche du panneau support 11. Dans la forme de réalisation plus particulièrement illustré à la figure 1, le panneau support 11 est constitué d'une plaque 110 munie d'une zone évidée 111, dont la forme correspond sensiblement à celle de l'élément de signalisation 12, et d'une zone de bordure transparente 112, qui est délimitée du côté de la zone évidée 111 par une surface interne plane 113 constituant les bords de la zone évidée 111 du panneau support. Ainsi, le module de rétro-éclairage 13 comporte plus particulièrement un circuit imprimé allongé 131 disposé suivant au moins un tel bord du panneau support, sur lequel est montée alignée une pluralité de diodes électroluminescentes 132 avec des espaces 133 entre elles, dits espaces inter-diodes. Le circuit imprimé allongé 131 est par exemple fixé par collage le long dudit bord. Le module de rétro-éclairage 13 peut éventuellement comporter deux tels circuits imprimés allongés 131, accueillant une pluralité de diodes électroluminescentes 132, disposés le long de deux bords opposés longitudinaux de la zone évidée 111 formée dans la plaque support 11.

Le module de rétro-éclairage 13 comprend encore une plaque-guide de lumière 135, par exemple réalisée en PMMA (abréviation de l'expression anglaise : polymethyl methacrylate), destinée à être montée dans la zone évidée 111 du panneau support 11. La plaque-guide de lumière 135 se présente sous la forme d'une plaque de faible épaisseur par rapport à ses autres dimensions et présente une surface latérale 136 destinée à venir en regard de la surface interne plane 113 du panneau support 11 lors de son montage dans la zone évidée 111, et qui constitue une surface de couplage optique avec les diodes électroluminescentes 132, depuis laquelle la lumière est émise latéralement dans la plaque-guide de lumière 135.

Pour permettre un positionnement et un montage correct de la plaque-guide de lumière 135 avec le circuit imprimé 131 sur la surface interne plane 113 du panneau support 11, on peut utiliser des moyens détrompeurs, destinés à éviter que la plaque-guide de lumière et le circuit imprimé, lors de leur montage sur la surface interne plane, prennent une position autre que leur bonne position de travail.

La plaque-guide de lumière 135 comprend encore une première surface 137, formant une surface de diffusion de la lumière vers l'élément de signalisation 12 sus-jacent, préférentiellement par l'intermédiaire d'un film mince diffusant 14, par exemple d'une épaisseur de l'ordre de la centaine de microns et réalisé en PC (polycarbonate) ou PET (polyéthylène téréphtalate), et destiné à être intercalé entre la plaque-guide de lumière 135 et l'élément de signalisation 12 lors du montage de l'ensemble dans la zone évidée afin d'homogénéiser la lumière émise. La plaque-guide de lumière 135 comprend aussi une seconde surface 138 opposée à la première surface 137, et sur laquelle est formé un réseau de microlentilles pour diriger la lumière conduite dans la plaque-guide de lumière 135 vers le film diffusant 14. Ces microlentilles, par exemple sphériques, forment ainsi une couche d'extraction de la plaque-guide de lumière 135 permettant d'améliorer l'extraction de lumière vers le film diffusant. Un film réfléchissant, non représenté, est en outre disposé adjacent à cette seconde surface 138 de la plaque-guide de lumière 135.

La figure 2 montre une vue de détail de cette couche d'extraction de la plaque-guide de lumière 135 au voisinage immédiat de sa surface de couplage 136 avec les diodes électroluminescentes 132. Conformément à l'invention, les microlentilles, référencées 139 sur la figure 2, sont agencées au sein de la couche d'extraction de la plaque-guide de lumière 135, de sorte que la densité de microlentilles 139 est forte et à tout le moins plus élevée dans les régions immédiatement voisines à la surface de couplage 136 et situées au droit des espaces inter-diodes 133 du circuit imprimé 131, tandis que cette densité est moins élevée et en tous les cas faibles, voire nulle, dans les régions immédiatement voisines à la surface de couplage 136 et situées au droit des diodes électroluminescentes 132. En configurant la densité de microlentilles 139 de cette manière au niveau de la couche d'extraction de la plaque guide de lumière 135 à proximité immédiate de sa surface de couplage avec les diodes, on amplifie fortement le travail d'extraction des microlentilles 139 dans les régions entre les diodes, qui sont des zones sombres, par contraste avec le travail d'extraction effectué dans les régions situées au droit des diodes, ce qui permet avantageusement de lisser l'effet de points chauds. Les régions de la plaque-guide de lumière 135 situées au voisinage de la surface de couplage 136 avec les diodes 132 et correspondant aux zones sombres entre les diodes 132 voient donc leur potentiel d'extraction de lumière fortement augmenté par rapport aux régions adjacentes situées au droit des diodes 132, en maximisant la densité de microlentilles 139 pour les unes et en minimisant au contraire la densité de microlentilles 139 pour les autres. Cet effet de masquage des diodes électroluminescentes 132 est renforcé en combinant l'effet de la plaque-guide de lumière 135 avec un traitement particulier du film diffusant 14 disposé adjacent à la première surface 137. Ainsi, le film diffusant 14 est superposée à la plaque-guide de lumière en recouvrant la première surface 137 et comprend alternativement des zones claires et des zones foncées disposées en regard respectivement des régions de la plaque-guide de lumière 135 immédiatement voisines à la surface de couplage 136 et situées au droit des espaces inter-diodes 133 et des régions immédiatement voisines à la surface de couplage 136 et situées au droit des diodes électroluminescentes 132. Les zones claires du film diffusant au droit des espaces inter-diodes permettent donc de diffuser davantage la lumière que les zones foncées du film diffusant, qui atténuent au contraire la diffusion de lumière au droit des diodes, contribuant ainsi au lissage des points chauds. Les zones foncées sont par exemple formées par impression sérigraphique à l'arrière du film diffusant 14. Le film diffusant 14 peut être formé par l'élément de signalisation 12 lui-même, auquel cas, l'impression des zones foncées en regard des régions de la plaque-guide de lumière au droit des diodes est réalisée directement à l'arrière de celui-ci.

En permettant ainsi d'atténuer fortement, voire de masquer les points chauds, c'est-à-dire les zones de proximité immédiate des diodes électroluminescentes, lumineuses et sombres, la provenance de l'émission de lumière n'est avantageusement pas détectable pour un observateur, donnant un rendu de diffusion lumineuse sensiblement uniforme sur la totalité de la surface éclairé de l'élément de signalisation 12. En outre, l'élément de signalisation peut être monté de sorte que son bord supérieur vienne directement en regard des diodes électroluminescentes, c'est-à-dire sans qu'il soit nécessaire de prévoir une quelconque distance, s'entendant dans le plan du panneau support, entre le bord supérieur de l'élément de signalisation et les diodes électroluminescentes. Ainsi, l'étiquette 12 est disposée de sorte à recouvrir les diodes électroluminescentes. Autrement dit, selon cet agencement, les diodes électroluminescentes sont montées sous-jacentes à l'étiquette 12 et sont disposées sensiblement le long du bord supérieur (et/ou inférieur) à l'intérieur de l'espace délimité par les bords de l'étiquette 12. Autrement dit encore, l'étiquette 12 est montée sur le panneau support 11 de sorte que son bord supérieur (et/ou inférieur) vienne en regard des diodes électroluminescentes suivant une direction normale au plan du panneau support.

Comme illustré à la figure 1, la plaque-guide de lumière 135, le film diffusant 14 et l'élément de signalisation 12 sont montés et maintenus en contact plan entre eux dans la zone évidée 111 de du panneau support 11. L'élément de signalisation 12 peut être recouvert d'un mince couvercle transparent 15 monté superposé à l'élément de signalisation 12 dans la zone évidée 111 de sorte que la face frontale de ce couvercle vienne affleurer la face extérieure du panneau support. L'élément de signalisation 12, qui est pincé entre la plaque-guide de lumière et la face arrière du couvercle transparent, s'étend alors dans un plan sensiblement confondu avec la face extérieure du panneau support.

## Revendications

1. Dispositif d'affichage d'une étiquette (12) avec pictogramme de sécurité, comprenant un panneau support (11) portant ladite étiquette, un module de rétro-éclairage (13) de ladite étiquette (12) comprenant une pluralité de diodes électroluminescentes (132) montées alignées avec des espaces inter-diodes (133) sur un circuit imprimé allongé (131) disposé suivant au moins un bord (113) dudit panneau support (11), et un film diffusant (14) disposé adjacent entre ledit module de rétro-éclairage (13) et ladite étiquette (12), **caractérisé en ce que** ladite étiquette (12) comporte un bord supérieur positionné directement en regard de ladite pluralité de diodes électroluminescentes, sans distance entre ledit bord supérieur et ladite pluralité de diodes électroluminescentes, ladite distance s'entendant dans le plan dudit panneau support, ledit module de rétro-éclairage (13) comprenant une plaque-guide de lumière (135) présentant une surface de couplage (136) avec ladite pluralité de diodes électroluminescentes (132) depuis laquelle la lumière est émise latéralement dans ladite plaque-guide de lumière (135), une première surface (137) disposée adjacente audit film diffusant et une seconde surface (138) opposée à ladite première surface (137) sur laquelle est formé un réseau de microlentilles (139) pour diriger la lumière conduite dans la plaque-guide de lumière (135) vers ledit film diffusant (14), la densité de microlentilles (139) étant plus élevée dans des régions de ladite seconde surface immédiatement voisines à ladite surface de couplage (136) et situées au droit des espaces inter-diodes (133) dudit circuit imprimé, et moins élevée dans des régions de ladite seconde surface immédiatement voisines à ladite surface de couplage (136) et situées au droit des diodes électroluminescentes (132), et **en ce que** ledit film diffusant (14) comprend alternativement des zones claires et des zones foncées disposées en regard respectivement desdites régions de ladite seconde surface de ladite plaque-guide de lumière (135) immédiatement voisines à ladite surface de couplage (136) et situées au droit des espaces inter-diodes (133) et desdites régions de ladite seconde surface immédiatement voisines à ladite surface de couplage (136) et situées au droit des diodes électroluminescentes (132).

2. Dispositif selon la revendication 1, **caractérisé en ce que** lesdites régions de ladite seconde surface (138) immédiatement voisines à ladite surface de couplage (136) et situées au droit des diodes électroluminescentes (132) sont dépourvues de microlentilles.

3. Dispositif selon la revendication 1 ou 2, **caractérisé en ce que** lesdites zones foncées sont formées par impression sérigraphique à l'arrière du film diffusant (14).

4. Dispositif selon l'une quelconque des revendications précédentes, **caractérisé en ce qu'**il comprend un film réfléchissant disposé adjacent à ladite seconde surface (138) de ladite plaque-guide de lumière (135).

5. Dispositif selon l'une quelconque des revendications précédentes, **caractérisé en ce que** ledit panneau support (11) est constitué d'une plaque (110) munie d'une zone évidée (111) de forme complémentaire à celle de l'étiquette (12) et d'une zone de bordure (112) transparents délimitée du côté de ladite zone évidée (111) par une surface interne plane (113) constituant ledit au moins un bord dudit panneau support (11).

6. Dispositif selon la revendication 5, **caractérisé en ce que** ladite plaque-guide de lumière (135), ledit film diffusant (14) et ladite étiquette (12) sont montés et maintenus en contact plan entre eux dans ladite zone évidée (111), de sorte que ledit élément de signalisation (12) s'étend dans un plan sensiblement confondu avec la face extérieure du panneau support (11).

7. Dispositif selon l'une quelconque des revendications précédentes, **caractérisé en ce que** ledit film diffusant (14) et ladite étiquette (12) forment un même élément.

## Patentansprüche

1. Vorrichtung zum Anzeigen eines Etiketts (12) mit Sicherheitspiktogramm mit einer Trägertafel (11), die das Etikett trägt, einem Modul (13) zur Hintergrundbeleuchtung des Etiketts (12) mit einer Vielzahl von Elektrolumineszenzdioden (132), die mit Diodenzwischenräumen (133) aneinandergereiht auf einer langgestreckten gedruckten Schaltung (131) montiert sind, die entlang mindestens eines Randes (113) der Trägertafel (11) angeordnet ist, und einem Streufilm (14), der benachbart zwischen dem Hintergrundbeleuchtungsmodul (13) und dem Etikett (12) angeordnet ist, **dadurch gekennzeichnet, dass** das Etikett (12) einen oberen Rand umfasst, der direkt gegenüber der Vielzahl von Elektrolumineszenzdioden ohne Abstand zwischen dem oberen Rand und der Vielzahl von Elektrolumineszenzdioden positioniert ist, wobei sich der Abstand in der Ebene der Trägertafel erstreckt, wobei das Hintergrundbeleuchtungsmodul (13) eine Lichtleiterplatte (135) umfasst, die eine Oberfläche (136) zur Kopplung mit der Vielzahl von Elektrolumineszenzdioden (132), von der das Licht seitlich in die Lichtleiterplatte (135) emittiert wird, eine erste Oberfläche (137), die benachbart zum Streufilm angeordnet ist, und eine zweite Oberfläche (138) entgegengesetzt zur ersten Oberfläche (137), auf der ein Netz von Mikrolinsen (139) ausgebildet ist, um das in der Lichtleiterplatte (135) geleitete Licht zum Streufilm (14) zu lenken, aufweist, wobei die Dichte von Mikrolinsen (139) in Bereichen der zweiten Oberfläche unmittelbar benachbart zur Kopplungsoberfläche (136), die direkt unter den Diodenzwischenräumen (133) der gedruckten Schaltung liegen, höher und in Bereichen der zweiten Oberfläche unmittelbar benachbart zur Kopplungsoberfläche (136), die direkt unter den Elektrolumineszenzdioden (132) liegen, weniger hoch ist, und dass der Streufilm (14) abwechselnd helle Zonen und dunkle Zonen umfasst, die gegenüber den Bereichen der zweiten Oberfläche der Lichtleiterplatte (135) unmittelbar benachbart zur Kopplungsoberfläche (136), die direkt unter den Diodenzwischenräumen (133) liegen, bzw. den Bereichen der zweiten Oberfläche unmittelbar benachbart zur Kopplungsoberfläche (136), die direkt unter den Elektrolumineszenzdioden (132) liegen, angeordnet sind.

2. Vorrichtung nach Anspruch 1, **dadurch gekennzeichnet, dass** die Bereiche der zweiten Oberfläche (138) unmittelbar benachbart zur Kopplungsoberfläche (136), die direkt unter den Elektrolumineszenzdioden (132) liegen, ohne Mikrolinsen sind.

3. Vorrichtung nach Anspruch 1 oder 2, **dadurch gekennzeichnet, dass** die dunklen Zonen durch Siebdruck an der Rückseite des Streufilms (14) ausgebildet sind.

4. Vorrichtung nach einem der vorangehenden Ansprüche, **dadurch gekennzeichnet, dass** sie einen Reflexionsfilm umfasst, der benachbart zur zweiten Oberfläche (138) der Lichtleiterplatte (135) angeordnet ist.

5. Vorrichtung nach einem der vorangehenden Ansprüche, **dadurch gekennzeichnet, dass** die Trägertafel (11) aus einer Platte (110) gebildet ist, die mit einer vertieften Zone (111) mit einer zu jener des Etiketts (12) komplementären Form und einer transparenten Kantenzone (112) versehen ist, die auf der Seite der vertieften Zone (111) durch eine ebene innere Oberfläche (113) begrenzt ist, die den mindestens einen Rand der Trägertafel (11) bildet.

6. Vorrichtung nach Anspruch 5, **dadurch gekennzeichnet, dass** die Lichtleiterplatte (135), der Streufilm (14) und das Etikett (12) in ebenem Kontakt miteinander in der vertieften Zone (111) montiert sind und gehalten werden, so dass das Signalisierungselement (12) sich in einer Ebene erstreckt, die im Wesentlichen mit der Außenfläche der Trägertafel (11) zusammenfällt.

7. Vorrichtung nach einem der vorangehenden Ansprüche, **dadurch gekennzeichnet, dass** der Streufilm (14) und das Etikett (12) ein gleiches Element bilden.

## Claims

1. Device for displaying a label (12) with a safety icon, comprising a support panel (11) supporting said label, a backlight module (13) of said label (12) comprising a plurality of light-emitting diodes (132) assembled aligned with inter-diode spaces (133) on an elongated printed circuit (131) arranged along at least one edge (113) of said support panel (11), and a diffusing film (14) arranged adjacent between said backlight module (13) and said label (12), **characterised in that** said label (12) comprises an upper edge positioned directly opposite said plurality of light-emitting diodes, with no distance between said upper edge and said plurality of light-emitting diodes, said distance extending into the plane of said support panel, said backlight module (13) comprising a light guide plate (135) having a surface for coupling (136) with said plurality of light-emitting diodes (132) from which the light is emitted laterally into said light guide plate (135), a first surface (137) arranged adjacent to said diffusing film and a second surface (138) opposite said first surface (137) whereon is formed a network of microlenses (139) to direct the light guided into the light guide plate (135) towards said diffusing film (14), the density of microlenses (139) being higher in regions of said second surface immediately next to said coupling surface (136) and situated to the right of the inter-diode spaces (133) of said printed circuit and lower in regions of said second surface immediately next to said coupling surface (136) and situated to the right of the light-emitting diodes (132), and **in that** said diffusing film (14) alternatively comprises clear zones and darkened zones arranged respectively opposite said regions of said second surface of said light guide plate (135) immediately next to said coupling surface (136) and situated to the right of the inter-diode spaces (133) and of said regions of said second surface immediately next to said coupling surface (136) and situated to the right of the light-emitting diodes (132).

2. Device according to claim 1, **characterised in that** said regions of said second surface (138) immediately next to said coupling surface (136) and situated to the right of the light-emitting diodes (132) have no microlenses.

3. Device according to claim 1 or 2, **characterised in that** said darkened zones are formed by serigraphic printing behind the diffusing film (14).

4. Device according to any one of the preceding claims, **characterised in that** it comprises a reflective film arranged adjacent to said second surface (138) of said light guide plate (135).

5. Device according to any one of the preceding claims, **characterised in that** said support panel (11) is constituted of a plate (110) equipped with a hollowed zone (111) of an additional form to that of the label (12) and a transparent bordering zone (112) defined from the side of said hollowed zone (111) by an internal flat surface (113) constituting said at least one edge of said support panel (11).

6. Device according to claim 5, **characterised in that** said light guide plate (135), said diffusing film (14) and said label (12) are assembled and kept in flat contact with each other in said hollowed zone (111), such that said signalling element (12) extends into a plane, substantially combined with the outer face of the support panel (11).

7. Device according to any one of the preceding claims, **characterised in that** said diffusing film (14) and said label (12) form a same element.
